**Europäisches Patentamt**

**European Patent Office**

**Office européen des brevets**

(11) Veröffentlichungsnummer: **0 179 284**
**B1**

(12) **EUROPÄISCHE PATENTSCHRIFT**

(45) Veröffentlichungstag der Patentschrift:
**22.06.88**

(51) Int. Cl.⁴: **G 02 B 7/04**, G 03 B 21/11

(21) Anmeldenummer: **85111985.9**

(22) Anmeldetag: **21.09.85**

(54) **Objektivhalterung.**

(30) Priorität: **26.10.84 DE 3439254**

(43) Veröffentlichungstag der Anmeldung:
**30.04.86 Patentblatt 86/18**

(45) Bekanntmachung des Hinweises auf die Patenterteilung:
**22.06.88 Patentblatt 88/25**

(84) Benannte Vertragsstaaten:
**DE FR GB**

(56) Entgegenhaltungen:
**AT - B - 353 503**
**DD - A - 140 294**
**DE - A - 2 924 739**
**DE - A - 3 050 314**
**DE - A - 3 329 003**
**GB - A - 2 059 105**

(73) Patentinhaber: **MAP Mikrofilm Apparatebau Dr. Poehler GmbH & Co. KG, Schulstrasse 2, D-6352 Ober-Mörlen (DE)**

(72) Erfinder: **Dziemba, Peter Ing. grad., Ahornweg 17, D-6351 Wisselheim (DE)**
Erfinder: **Immerheiser, Dieter, Rödger weg 68, D-6350 Bad Nauheim (DE)**

(74) Vertreter: **Schlagwein, Udo, Dipl.-Ing., Anwaltsbüro Ruppert & Schlagwein Bahnhofsallee 11, D-6350 Bad Nauheim (DE)**

## Beschreibung

Die Erfindung bezieht sich auf eine Objektivhalterung mit einer schwimmend in einem Objektivhalter angeordneten, auf einer Filmbühne abstützbaren Objektivhülse, in der ein mittels einer einen Stellmotor aufweisenden Fokussiereinrichtung axial in der Objektivhülse verschiebliches Objektiv vorgesehen ist. Solche Objektivhalterungen sind beispielsweise in Mikrofilm-Lesegeräten gebräuchlich und daher allgemein bekannt.

Durch die gleitende Abstützung der Objektivhülse auf der Filmbühne bleibt der Abstand zwischen Mikrofilm und Objektiv bei einer Relativbewegung zwischen Filmbühne und Objektiv konstant, sofern die Dicke der oberen, durchsichtigen Platte der Filmbühne konstant ist und der Mikrofilm plan in der Filmbühne liegt. In der Praxis muss jedoch beim Wechsel von Filmen mit unterschiedlicher Schichtlage nachfokussiert werden. Dies trifft besonders bei automatischem Filmwechsel zu.

Bei den bekannten Objektivhalterungen ist die von einem Stellmotor angetriebene Fokussiereinrichtung am Objektivhalter oder dem Gerätegehäuse befestigt. Da sich die Objektivhülse jedoch in axialer Richtung relativ zum Objektivhalter bewegt, müssen zwischen der Objektivhülse und der Fokussiereinrichtung bewegliche Übertragungsglieder vorgesehen sein, durch die diese Möglichkeit einer Relativbewegung erhalten bleibt. Diese beweglichen Übertragungsglieder sind relativ aufwendig, bedingen unerwünschtes Spiel in der Fokussiereinrichtung und können Ursache für ein Verklemmen des Objektivs sein.

Der Erfindung liegt die Aufgabe zugrunde, eine Objektivhalterung der eingangs genannten Art zu entwickeln, die möglichst einfach aufgebaut ist und bei der die Beweglichkeit der auf der Filmbühne abgestützten Objektivhülse durch die Fokussiereinrichtung möglichst wenig eingeschränkt wird.

Diese Aufgabe wird erfindungsgemäss dadurch gelöst, dass die Fokussiereinrichtung ganzheitlich an der Objektivhülse befestigt ist.

Bei einer solchen Objektivhalterung vermag sich die Objektivhülse mitsamt der Fokussiereinrichtung entsprechend der Filmbühne auszurichten, ohne dass von der Fokussiereinrichtung Kräfte ausgeübt werden, die diese Ausrichtung behindern könnten. Deshalb ist sichergestellt, dass es nicht zu einem Verklemmen des Objektivs oder der Objektivhülse kommen kann. Hiervon abgesehen, ist die erfindungsgemässe Objektivhalterung sehr einfach im Aufbau und deshalb kostengünstig herstellbar.

Eine vorteilhafte Ausgestaltung der Erfindung besteht darin, dass der Stellmotor in radialer Ausrichtung an der Objektivhülse befestigt ist und mit einem von ihm angetriebenen Exzenter unter einem Bund des Objektivs greift. Diese Ausführungsform ist ganz besonders einfach im Aufbau.

Um zu verhindern, dass der Stellmotor mit seinem Exzenter aufgrund seines Gewichtes ein Kippmoment auf die Objektivhülse auszuüben vermag, kann auf der dem Stellmotor gegenüberliegenden Seite der Objektivhülse an der Objektivhülse ein Ausgleichsgewicht vorgesehen sein. Die Masse des kleinen Stellmotors und des entsprechenden Gegengewichtes sind dabei für eine sichere Auflage des Systems auf der oberen Platte erwünscht und ersparen damit Andruckfedern, welche eine von äusseren Einflüssen freizuhaltende Pendelung behindern könnten.

Um es dem Objektiv zu ermöglichen, sich im Objektivhalter frei entsprechend des Verlaufs der oberen Platte der Filmbühne ausrichten zu können, ist es günstig, wenn die Objektivhülse aussenseitig mit einem umlaufenden Wulst und geringem Spiel gegen die Wandung des Objektivhalters anliegt.

Die erfindungsgemässe Halterung der Fokussiereinrichtung an der Objektivhülse ist besonders bei Objektivhaltern zweckmässig, in denen mehrere Objektive angeordnet sind, weil dann bei einem Objektivwechsel kein Nachfokussieren erforderlich wird. Die Einstellung eines Objektivs bleibt bei einem Objektivwechsel stets erhalten, weil jedes Objektiv eine eigene Fokussiereinrichtung hat.

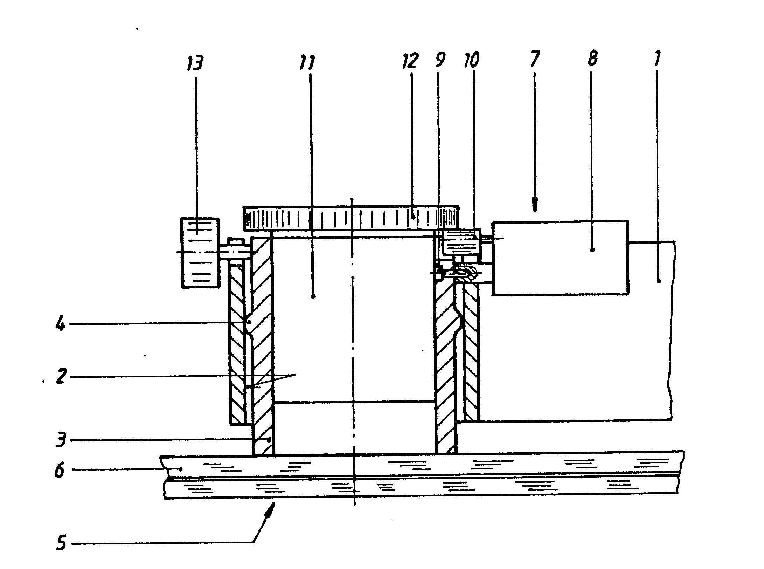

Die Erfindung lässt zahlreiche Ausführungsmöglichkeiten zu. Zur Verdeutlichung ihres Grundprinzips ist eine davon schematisch in der Zeichnung dargestellt und wird nachfolgend beschrieben. Die Zeichnung zeigt einen schematischen Schnitt durch eine erfindungsgemäss gestaltete Objektivhalterung.

In der Zeichnung ist ein Objektivhalter 1 dargestellt, der in einer Bohrung 2 eine Objektivhülse 3 haltert. Die Objektivhülse 3 liegt mit einem ausenseitigen, umlaufenden Wulst 4 mit geringem Spiel gegen die Wandung der Bohrung 2 an und kann sich deshalb in der Bohrung auf und ab bewegen, aber auch in ihr eine Pendelbewegung ausführen.

Unterhalb der Objektivhülse 3 befindet sich eine Filmbühne 5 mit einer oberen durchsichtigen Platte 6, auf der die Objektivhülse 3 gleitend mit einer Stirnseite aufsitzt.

Eine Fokussiereinrichtung 7 hat einen Stellmotor 8, der an der Objektivhülse 3 in radialer Ausrichtung mittels Schrauben 9 befestigt ist und bei dem es sich um einen Getriebemotor handelt. Dieser Stellmotor 8 vermag einen Exzenter 10 anzutreiben, auf den ein in der Objektivhülse geführtes Objektiv 11 mit einem Bund 12 aufliegt. Dreht sich der Exzenter 10, so wird das Objektiv 11 mehr oder weniger aus der Objektivhülse 3 herausgezogen und damit fokussiert.

An der dem Stellmotor 8 gegenüberliegenden Seite ist an der Objektivhülse 3 ein Ausgleichsgewicht 13 befestigt, so dass die Objektivhülse 3 mit gleichmässiger Kraft auf der Platte 6 aufsitzt.

## Patentansprüche

1. Objektivhalterung mit einer schwimmend in einem Objektivhalter angeordneten, auf einer Filmbühne abstützbaren Objektivhülse, in der ein mittels einer einen Stellmotor aufweisenden Fokussiereinrichtung axial in der Objektivhülse ver-

schiebliches Objektiv vorgesehen ist, dadurch gekennzeichnet, dass die Fokussiereinrichtung (7) ganzheitlich an der Objektivhülse (3) befestigt ist.

2. Objektivhalterung nach Anspruch 1, dadurch gekennzeichnet, dass der Stellmotor (8) in radialer Ausrichtung an der Objektivhülse (3) befestigt ist und mit einem von ihm angetriebenen Exzenter (10) unter einen Bund (12) des Objektivs (11) greift.

3. Objektivhalterung nach Anspruch 1 oder einem der folgenden, dadurch gekennzeichnet, dass auf der dem Stellmotor (8) gegenüberliegenden Seite der Objektivhülse (3) an der Objektivhülse (3) ein Ausgleichsgewicht (13) vorgesehen ist.

4. Objektivhalterung nach Anspruch 1 oder einem der folgenden, dadurch gekennzeichnet, dass die Objektivhülse (3) aussenseitig mit einem umlaufenden Wulst (4) mit geringem Spiel gegen die Wandung des Objektivhalters (1) anliegt.

5. Objektivhalterung nach Anspruch 1 oder einem der folgenden, dadurch gekennzeichnet, dass der Objektivhalter (1) zur Aufnahme mehrerer Objektivhülsen (3) ausgebildet ist.

## Claims

1. Objective mounting with a lens sleeve that is designed to float in a lens holder and that can be supported on a film holder and in which a lens is provided capable of sliding axially in the lens sleeve itself by means of a focussing device with a servomotor, characterized in that the complete focussing device (7) is fixed in to the lens sleeve (3).

2. Objective mounting according to claim 1, characterized in that the servomotor (8) is fixed at the lens sleeve (3) in radial alignment and grips with an eccentric (10) driven by said servomotor (8) below a collar (12) of the lens (11).

3. Objective mounting according to claim 1 or one of the following claims, characterized in that a counterweight (13) is provided at the lens sleeve (3) at the side of the lens sleeve (3) opposite the servomotor (8).

4. Objective mounting according to claim 1 or one of the following claims, characterized in that the lens sleeve (3) rests with a bead (4) along the external surface of the lens sleeve (3) against the wall of the lens holder (1) with a low degree of play.

5. Objective mounting according to claim 1 or one of the following claims, characterized in that the lens holder (1) is adapted to accommodate a plurality of lens sleeves (3).

## Revendications

1. Fixation d'objectif comportant une douille d'objectif montée flottante dans un support d'objectif, pouvant prendre appui sur une platine de film, dans laquelle est prévu un objectif pouvant translater axialement dans la douille d'objectif au moyen d'un dispositif de mise au point comportant un moteur de commande, caractérisée en ce que le dispositif de mise au point (7) est fixé dans son entier à la douille d'objectif (3).

2. Fixation d'objectif selon la revendication 1, caractérisé en ce que le moteur de commande (8) est fixé à la douille d'objectif (3) en direction radiale et vient en prise avec un excentrique (10) entrainé par lui sous une collerette (12) de l'objectif (11).

3. Fixation d'objectif selon la revendication 1 ou l'une des suivantes, caractérisée en ce que du côté de la douille d'objectif (3) opposé au moteur de commande (8) est disposé un contrepoids d'équilibre (13) sur la douille d'objectif (3).

4. Fixation d'objectif selon la revendication 1 ou l'une des suivantes, caractérisée en ce que la douille d'objectif (3) est disposée à faible jeu contre la paroi du support d'objectif (1) avec un bourrelet circulaire extérieur.

5. Fixation d'objectif selon la revendication 1, caractérisée en ce que le support d'objectif (1) est conformé pour recevoir plusieurs douilles d'objectif (3).